# EUROPÄISCHE PATENTSCHRIFT

(11) **EP 0 803 032 B1**
(45) Veröffentlichungstag und Bekanntmachung des Hinweises auf die Patenterteilung: **21.06.2000**
(21) Anmeldenummer: 96945845.4
(22) Anmeldetag: 28.10.1996
(51) Int. Cl.: F16G 13/16

(54) **ENERGIEFÜHRUNGSKETTE**
ENERGY MANAGEMENT CHAIN
CHAINE DE GESTION DE L'ENERGIE

(30) Priorität: 10.11.1995 DE 19541928
(43) Veröffentlichungstag der Anmeldung: 29.10.1997
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Stachow, Ernst-Walther, Prof. Dr.
(86) Internationale Anmeldenummer: DE9602067
(87) Internationale Veröffentlichungsnummer: WO9717557

(56) Entgegenhaltungen:
- EP-A- 0 154 882
- DE-U- 8 814 076

## Beschreibung

Die Erfindung betrifft einen ersten Typ von Energieführungsketten zur Führung von Schläuchen, Kabeln oder dergleichen zwischen zwei Anschlußpunkten, wobei die Kettenglieder jeweils zwei Seitenteile aufweisen, die über mindestens einen Quersteg miteinander verbunden sind, wobei die aus Seitenteilen zusammengefügten Bändern der Energieführungskette aus alternierend zueinander angeordneten Innenlaschen und Außenlaschen bestehen, wobei die Innenlaschen dem Inneren der Energieführungskette zugewandte überlappende Bereiche und die Außenlaschen nach außen vorspringende überlappende Bereiche aufweisen und über diese gelenkig in einer Ebene verschwenkbar miteinander verbunden sind.

Die Erfindung betrifft einen zweiten Typ von Energieführungsketten zur Führung von Schläuchen, Kabeln oder dergleichen zwischen zwei Anschlußpunkten, wobei die Kettenglieder jeweils zwei gekröpfte Seitenteile mit einem nach außen gekröpften Bereich und einem nach innen gekröpften Bereich aufweisen, wobei die Seitenteile über mindestens einen Quersteg miteinander verbunden sind und die Seitenteile benachbarter Kettenglieder miteinander überlappende Bereiche aufweisen und über diese gelenkig miteinander verbunden sind.

Energieführungsketten des ersten Typs mit alternierenden Innen- und Außenlaschen sind zum Beispiel aus der DE 43 25 259 C2 bekannt, während Energieführungsketten des zweiten Typs mit gekröpften Seitenteilen zum Beispiel in der DE 34 31 531 A1 beschrieben sind.

Generell dienen Energieführungsketten der Zuführung von flexiblen Versorgungsleitungen von einem ortsfesten Ausgangspunkt zu einem beweglichen Verbraucher. Dabei werden die Energieführungsketten, der Bewegung des Verbrauchers folgend, in einer vertikal angeordneten Ebene verfahren. Insbesondere bei freitragenden Anwendungen der Energieführungskette mit bogenförmig durchhängenden Bereichen, d.h., wenn das Obertrum der Energieführungskette frei über dem Untertrum angeordnet ist und nach unten durchhängt, treten bei Zug- aber auch bei Druckbeanspruchung des freitragenden Teils der Energieführungskette hohe auf den Gelenkbereich der Kettenglieder wirkende Momente auf. Weist die derart eingesetzte Energieführungskette eine nur unzureichende Seitenstabilität auf, so kann dies zu einer Verschwenkung der überlappenden Bereiche aus der Verschwenkebene führen, so daß die Gelenkbolzen nicht mehr gleichmäßig von den angrenzenden Seitenteilen beansprucht werden. Es treten vielmehr an den Gelenkbolzen Zonen hoher mechanischer Beanspruchung auf, die letztlich bis zum Bruch der Gelenkbolzen führen können. Ähnliche Verschleißerscheinungen werden auch im aufsteigenden Bereich der Umlenkbögen von Energieführungsketten beobachtet, wenn das Obertrum gleitend auf dem Untertrum geführt wird.

In einem anderen Anwendungsbereich werden die beweglichen Verbraucher in einer horizontalen Ebene bewegt, wobei damit auch die Energieführungsketten in dieser horizontalen Ebene zu verfahren sind. Auch hier erweist sich eine unzureichende Seitenstabilität der Energieführungsketten als nachteilig. Da die Energieführungsketten zumeist frei hängend angeordnet werden ist eine unterseitige Abstützung der Energieführungsketten durch entsprechend modifizierte Führungsrinnen konstruktiv überaus aufwendig oder nicht durchführbar. Frei in Seitenlage angeordnete Energieführungsketten hängen daher oftmals nach unten hin durch. Dadurch ist bei der Verfahrung der Energieführungskette ein erhöhter Kraftaufwand notwendig, des weiteren werden aufgrund des Durchhängens die Gelenkbereiche der Kettenglieder senkrecht zum Verfahrweg mechanisch stark belastet, wodurch wiederum Zonen hoher Belastung, verbunden mit einem erhöhten Abrieb, resultieren und die Lebensdauer der Kettenglieder drastisch vermindert wird.

Aufgabe der vorliegenden Erfindung ist es daher, Energieführungsketten der beiden eingangs genannten Typen zu schaffen, die eine hohe Seitenstabilität aufweisen und, insbesondere in Seitenlage montiert, nicht durchhängen und die einfach und kostengünstig herstellbar sind.

Erfindungsgemäß wird diese Aufgabe bei Energieführungsketten des ersten Typs dadurch gelöst, daß zumindest eines der in einem Band der Energieführungskette jeweils benachbarten Seitenteile mindestens eine sich parallel zur Verschwenkebene erstreckende Führungsnut aufweist und das zu diesem benachbarte Seitenteil über den gesamten Verschwenkwinkel mit mindestens einem sich parallel zur Verschwenkebene erstreckenden Führungsteil in eine der Führungsnuten eingreift.

Insbesondere kann das Führungsteil als sich parallel zur Verschwenkebene erstreckender Vorsprung ausgebildet sein, der stirnseitig in Richtung zum benachbarten Kettenglied am Seitenteil angeordnet ist.

Für Energieführungsketten des zweiten Typs wird die Aufgabe erfindungsgemäß dadurch gelöst, daß das freie Ende eines überlappenden Bereichs des Seitenteils stirnseitig mindestens einen sich parallel zur Verschwenkebene erstreckenden Vorsprung, und, diesem gegenüberliegend, mindestens eine sich parallel zur Verschwenkebene erstreckende Führungsnut aufweist, wobei das Seitenteil mit mindestens einem Vorsprung in mindestens eine Führungsnut im benachbarten Seitenteil eingreift.

Die Lösungsmerkmale sind zwar aus der DE 88 14 076 U bekannt. Die in diesem Dokument beschriebene Energieführungskette setzt sich jedoch aus Seitenteilen mit einem gabelförmigen Ende zusammen, dessen beide Befestigungslaschen Öffnungen aufweisen, in die beidseitig angeordnete Zapfen der Befestigungslasche des gegenüberliegenden Endes eingreifen. Bei diesem Kettentyp handelt es sich um eine grundsätzlich andere Bauart im Vergleich zu Energieführungsketten des eingangs genannten ersten und zweiten Typs, bei denen benachbarte Seitenteile über einseitig miteinander überlappende Bereiche gelenkig miteinander verbunden sind. Das der Erfindung zugrundeliegende Problem tritt ausschließlich bei den zuletzt genannten Energieführungsketten auf.

Die erfindungsgemäß vorgesehene Führungsnut kann dabei eine vergleichsweise geringe Länge aufweisen, solange gewährleistet ist, daß stets ein Führungsteil des benachbarten Seitenteils in die Führungsnut eingreift. Dabei können die Führungsnut bzw. die Flanken derselben auch durchbrochen sein, so daß die Führungsnut letztlich lediglich durch einen einzigen oder durch eine Anzahl von zueinander beabstandeten Vorsprüngen definiert wird. Ist der in die Führungsnut eingreifende Teil des benachbarten Seitenteils gegenüber beiden Flanken der Führungsnut mit geringem Spiel geführt, so ist ein Verkippen der Seitenteile in beiden Richtungen aus der Verschwenkebene heraus verhindert und die Energieführungskette in ihren beiden Seitenlagen einsetzbar.

Als Führungsteil kann dabei insbesondere auch der äußere Rand des überlappenden Bereichs des Seitenteils dienen.

Die vorliegende Erfindung ist dabei insbesondere unabhängig von der sonstigen Ausgestaltung der Querstege anwendbar. Die Querstege können einteilig an den Seitenteilen angeformt oder mittels bekannter Rast- oder Scharnierverbindungen mit diesen verbunden sein. Die Querstege können sich auch über einen größeren Längsbereich der Seitenteile erstrecken, so daß im wesentlichen geschlossene Kettenglieder resultieren. Insbesondere können die Querstege auch in Längsrichtung unterteilt ausgeführt sein, so daß bei der erfindungsgemäßen Ausführung der Kettenglieder die Stabilität derselben noch erhöht wird.

Unter dem stirnseitigen Bereich in der vorstehend beschriebenen Ausführung ist der auf das benachbarte Seitenteil weisende Bereich eines Seitenteils zu verstehen. Hierdurch ist der Vorsprung von der Gelenkverbindung der benachbarten Seitenteile maximal beabstandet, so daß eine besonders hohe Seitenstabilität resultiert.

In einer bevorzugten Weiterbildung der Erfindung weist der Vorsprung eine geringere Dicke als das Seitenteil in dessen an den Vorsprung angrenzenden Bereich auf und ist von der Außenfläche des Seitenteils beabstandet. Dadurch können die Seitenteile in einer geringen Breite gefertigt werden. Dabei hat es sich gezeigt, daß eine derartige Bemessung des Vorsprungs völlig ausreichend ist, um eine ausreichende Seitenstabilität der Energieführungskette zu erzielen. Insbesondere in einer derartigen Ausführungsform kann auch der die Führungsnut außenseitig begrenzende Bereich des Seitenteils auf eine derartige seitliche Ausdehnung beschränkt werden, daß er nicht über die Höhe des angrenzenden Bereichs des benachbarten Seitenteils vorsteht. Hierdurch ist eine kompakte Ausführung in der Energieführungskette geschaffen, wobei zugleich seitlich vorspringende Bereiche, die zu einem Verhaken der Kettenglieder der Energieführungskette führen könnten, vermieden werden.

Vorteilhafterweise sind die Führungsnut und der Vorsprung einander benachbarter Seitenteile als Kreisbogensegmente ausgebildet, die sich über im wesentlichen die gesamte Höhe des überlappenden Bereichs der Seitenteile erstrecken. Hierdurch ist eine maximale Anlagefläche des in die Führungsnut eingreifenden Führungsteils mit der Flanke der Führungsnut im Falle einer Abwinkelung o. dgl. gegeben, wodurch eine Energieführungskette mit besonders hoher Seitenstabilität vorliegt, die insbesondere zur Aufnahme von schweren Schläuchen, Kabeln oder dergleichen geeignet ist.

Um die aneinander befestigten Seitenteile einfach voneinander lösen zu können, kann zumindest an einem der überlappenden Bereiche benachbarter Seitenteile angrenzend zu dem überlappenden Bereich des anderen Seitenteils eine Ausnehmung vorgesehen sein, in die ein Werkzeug einführbar ist, das an beide überlappende Bereiche angreift. Hierdurch können die Seitenteile besonders einfach voneinander abgehebelt werden.

Die Führungsnut und der in diese eingreifende Vorsprung benachbarter Seitenteile können mit Anschlagflächen zur Begrenzung des Verschwenkwinkels der beiden Seitenteile versehen sein. Dabei können die Anschlagflächen an in der Führungsnut angeordneten oder von den Vorsprüngen parallel zur Verschwenkebene vorstehenden Vorsprüngen vorgesehen sein, die in entsprechende Ausnehmungen eingreifen. Hierduch sind die Anschläge von den Gelenkbereichen maximal beabstandet, wodurch besonders günstige Hebelverhältnisse vorliegen und die Seitenteile nicht durch senkrecht zu deren Hauptebene verlaufende Sackbohrungen geschwächt sind.

In einer bevorzugten Ausführungsform sind die Seitenteile durch einstückig angeformte Gelenkbolzen und korrespondierende Ausnehmungen miteinander verbunden, wobei die Höhe der Gelenkbolzen und die Tiefe, mit der sich das Führungsteil in die zugehörige Führungsnut erstreckt, so bemessen sind, daß die Gelenkbolzen im Zusammenwirken mit der Führungsnut und dem Vorsprung eine Schnappverbindung bilden. Die Kettenglieder können so unter schräger Führung zueinander rastend aneinander befestigt werden. Insbesondere können die Höhe der Gelenkbolzen und die Tiefe des in die Führungsnut eingreifenden vorsprungs so bemessen sein, daß die Seitenteile unter Ausübung eines Druckes oder eines leichten Schlages aneinander rastend befestigbar sind. Hierdurch sind die Seitenteile noch auf einfache Art und Weise befestigbar bzw. voneinander lösbar, wobei aufgrund der engen Rastverbindung zugleich eine hohe Seitenstabilität der Energieführungskette resultiert. Insbesondere sind derartige Seitenteile einstückig herstellbar, wodurch der Montageaufwand sowie die Herstellungskosten minimiert sind. Eine besonders einfache Handhabung der Seitenteile bei deren Befestigung aneinander ist gegeben, wenn Gelenkbolzen, Anschlag und Vorsprung gemeinsam an dem jeweils außenliegenden überlappenden Bereich des Seitenteils angeordnet sind.

Um die Montage weiter durch ein Aufeinandergleiten der Seitenteile und ein einfacheres Ineinandereingreifen zu erleichtern und eine Verbindung der Kettenglieder mit möglichst geringem Spiel zu ermöglichen, können der Gelenkbolzen und/oder der Vorsprung und/oder die korrespondierende Führungsnut abgeschrägte Außenkanten aufweisen.

Eine besonders vorteilhafte Ausführungsform liegt vor, wenn die abgeschrägten Kanten des Vorsprungs und/oder der korrespondierenden Führungsnut mit Einbuchtungen versehen sind. Bei der Befestigung der Seitenteile aneinander können Teilbereiche eines Seitenteils durch die an dem benachbarten Seitenteil angeordneten Einbuchtungen geführt werden, so daß die Befestigung der Seitenteile aneinander weiter erleichtert ist.

Bei Energieführungsketten mit Bändern von Seitenteilen aus alternierenden Innen- und Außenlaschen, wobei an den überlappenden Bereichen der Außenlaschen einstückig angeformte Gelenkbolzen und an den überlappenden Bereichen der Innenlaschen mit den Gelenkbolzen korrespondierende Gelenkausnehmungen vorgesehen sind und die Innenlaschen zum Kettenäußeren vorstehende Mittelbereiche aufweisen, ist bevorzugt vorgesehen, daß das Führungsteil jeweils an den freien Enden der überlappenden Bereiche der Außenlasche und die Führungsnut an den den Außenlaschen zugewandten Seiten des Mittelbereichs der Innenlasche angeordnet sind.

Des weiteren kann bei Energieführungsketten mit Bändern aus alternierenden Innen- und Außenlaschen, wobei die überlappenden Bereiche der Innenlaschen und Außenlaschen miteinander durch lösbare Gelenkbolzen verbindbar sind und die Innenlaschen zum Kettenäußeren und die Außenlaschen zum Ketteninneren vorstehende Mittelbereiche aufweisen, vorgesehen sein, daß das Führungsteil jeweils an den freien Enden der überlappenden Bereiche der Außenlasche und der Innenlasche und die Führungsnut jeweils an den den benachbarten Seitenteilen zugewandten Seiten der Mittelbereiche der Außenlasche und der Innenlasche angeordnet sind. Eine besonders vorteilhafte Weiterbildung besteht darin, das Führungsteil jeweils an den freien Enden der überlappenden Bereiche der Außenlasche und der Innenlasche und die Führungsnut jeweils an den den benachbarten Seitenteilen zugewandten Seiten des Mittelbereichs der Innenlaschen und der Außenlaschen anzuordnen. Dadurch greifen die Seitenteile kammartig ineinander und jede der Hälften eines Seitenteils wird sowohl außenseitig als auch innenseitig von einem benachbarten Seitenteil geführt. Darüber hinaus können Seitenteile, die in benachbarten Strängen von Seitenteilen einander gegenüberliegen, baugleich ausgeführt werden, so daß Energieführungsketten besonders hoher Seitenstabilität resultieren.

Im folgenden ist die Erfindung in der Zeichnung beispielhaft veranschaulicht und anhand der Zeichnung näher beschrieben. Es zeigen:
- Fig. 1: eine Ansicht eines erfindungsgemäßen Seitenteils in einer ersten Ausführungsform von der dem Ketteninneren zugewandten (oben) und abgewandten Seite (unten);
- Fig. 2: eine Draufsicht auf ein Seitenteil nach Fig. 1 (oben);
- Fig. 3: eine Draufsicht auf eine Energieführungskette nach Fig. 1 und 2;
- Fig. 4: eine seitliche Ansicht sowie eine Draufsicht eines Seitenteils als Außenlasche gemäß einer zweiten Ausführungsform der Energieführungskette;
- Fig. 5: eine seitliche Ansicht sowie eine Draufsicht eines Seitenteils als Innenlasche gemäß einer zweiten Ausführungsform;
- Fig. 6: eine Draufsicht auf eine Energieführungskette nach Fig. 4 und 5;
- Fig. 7: eine Ansicht eines erfindungsgemäßen Seitenteils als Außenlasche in einer dritten Ausführungsform von der dem Ketteninneren zugewandten (oben) und abgewandten Seite (unten), sowie in der Draufsicht (Mitte);
- Fig. 8: eine Ansicht eines erfindungsgemäßen Seitenteils als Innenlasche in einer dritten Ausführungsform von der dem Ketteninneren zugewandten (oben) und abgewandten Seite (unten), sowie in der Draufsicht (Mitte);
- Fig. 9: eine Draufsicht auf eine Energieführungskette nach Fig. 7 und 8;

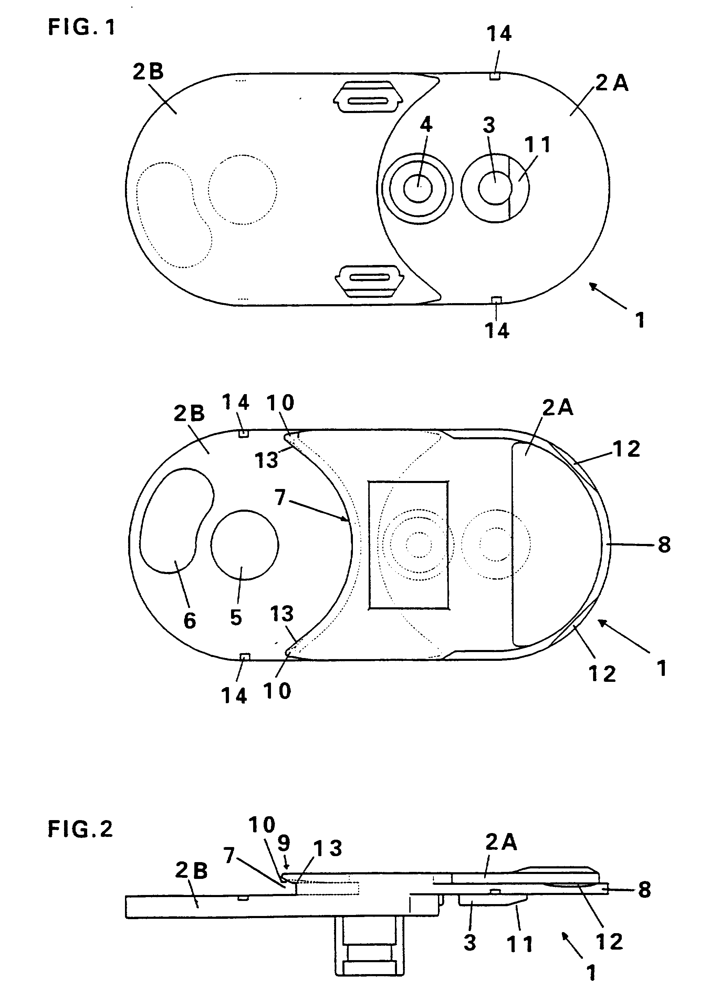

In den Fig. 1, 2 und 3 sind die Seitenteile der erfindungsgemäßen Energieführungskette in einer ersten Ausführungsform dargestellt. Die Seitenteile 1 sind gekröpft ausgeführt, wobei die mit benachbarten Kettengliedern überlappenden, vorgekröpften Bereiche 2A an ihrer Innenseite jeweils mit einem einteilig angeformten Gelenkbolzen 3 sowie mit einem den Verschwenkwinkel benachbarter Seitenteile eingrenzenden Anschlag 4 versehen sind. Der zurückspringende, eingegröpfte Bereich 2B des Seitenteils weist eine Ausnehmung 5, in die ein Gelenkbolzen 3 des benachbarten Seitenteils einführbar ist, sowie eine Ausnehmung 6 auf, die mit einem Anschlag 4 des benachbarten Seitenteils korrespondiert. Das Seitenteil 1 ist erfindungsgemäß mit einer Führungsnut 7 versehen, die an dem überlappenden Bereich 2A, dem freien Ende desselben gegenüberliegend, angeordnet ist und deren Grund sich in einer Ebene parallel der Verschwenkebene des Seitenteils 1 erstreckt. Stirnseitig an dem freien Ende des überlappenden Bereichs 2A befindet sich der Vorsprung 8, der im montierten Zustand der Energieführungskette in die Führungsnut 7 des benachbarten Seitenteils eingreift, so daß ein Verkippen oder ein Versatz benachbarter Seitenteile gegeneinander in einer Richtung senkrecht zur Verschwenkebene begrenzt wird und eine Energieführungskette hoher Seitenstabilität resultiert. Die Führungsnut 7 sowie der in die Führungsnut 7 des benachbarten Seitenteils eingreifende Vorsprung 8 sind dabei als Kreisbogensegmente ausgeführt, die sich über die gesamte Höhe des Seitenteils 1 erstrecken, so daß der Vorsprung 8 über den gesamten Verschwenkbereich in einem möglichst großflächigen Bereich in der Führungsnut 7 geführt ist. Dadurch ist die Energieführungskette auch für hohe seitliche Beanspruchungen ausgelegt. Der Vorsprung 8 erstreckt sich dabei nur über die halbe Dicke des überlappenden Bereichs 2A und schließt auf dessen Innenseite bündig mit diesem ab, so daß die den Vorsprung 8 umgreifende, äußere Flanke 9 der Führungsnut 7 nach außen hin nicht über den angrenzenden Bereich des benachbarten Seitenteils vorsteht. Hiermit liegt sowohl eine besonders kompakte Ausführungsform vor, wobei zugleich ein Verhaken der Kettenglieder mit anderen Bauteilen vermieden wird.

Zur Erleichterung der Montage der Seitenteile ist die äußere Flanke 9 der Führungsnut 7 an der innenliegenden Außenkante mit einer Schräge 10 versehen. Des weiteren ist auch der Gelenkbolzen 3 mit einer Auflaufschräge 11 versehen, die in Längsrichtung des Seitenteils 1 angeordnet ist. Zur Montage benachbarter Seitenteile wird unter schräger Führung der vorspringende Bereich 2A des ersten Seitenteils mit dem zurückspringenden Bereich 2B des zweiten Seitenteils zur Überlappung gebracht, so daß der an dem ersten Seitenteil angeordnete Vorsprung 8 in die Führungsnut 7 des zweiten Seitenteils eingreift und die Auflaufschräge 11 des Gewindebolzens 3 des ersten Seitenteils im wesentlichen flächig an dem zurückspringenden Bereich 2B des zweiten Seitenteils anliegt. Dabei sind die Höhen des Gelenkbolzens 3 sowie des Anschlags 4, Neigung und Ausdehnungen der Schrägen 10 und 11 sowie die Ausdehnung des Vorsprungs 8 in einer zur Verschwenkebene parallelen Ebene in ihren Abmessungen so aufeinander abgestimmt, daß der rastende Eingriff der Seitenteile unter Ausübung eines geringen Druckes oder eines leichten Schlages auf das Seitenteil in dessen Einschubrichtung noch durchführbar ist. Hiermit liegt eine möglichst spielfreie und stabile Rastverbindung vor.

Die Montage wird dabei noch durch die an dem Vorsprung 8 sowie an der Schräge 10 der Flanke 9 angeordneten Einbuchtungen 12 und 13 zusätzlich erleichtert, die derart angeordnet sind, daß bei einer Befestigung der Seitenteile die Einbuchtungen korrespondierender Vorsprünge 8 und Führungsnuten 7 auf gleicher Höhe angeordnet sind und aneinander vorbeigeführt werden. Die Einbuchtungen sind in der Art von Abschrägungen ausgeführt, die eine geringere Neigung als die Außenkanten des Vorsprungs 8 und der Flanke 9 der Führungsnut aufweisen. Die Einbuchtungen können sich auch über die gesamte Länge des Vorsprungs 8 oder der Flanke 9 der Führungsnut erstrecken oder auch gewölbt ausgeführt sein.

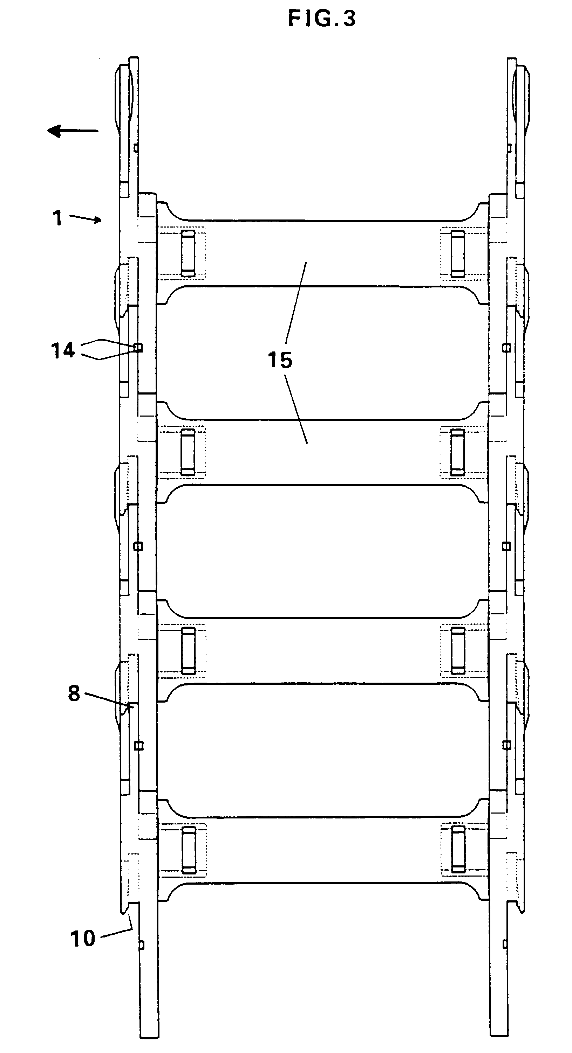

Des weiteren sind an den überlappenden Bereichen 2A, 2B der Seitenteile Ausnehmungen 14 angeordnet, die mit den Innen- bzw. Außenflächen der Bereiche 2A, 2B abschließen und im montierten Zustand der Seitenteile mit einer Ausnehmung des jeweils gegenüberliegenden überlappenden Bereichs des benachbarten Seitenteils fluchten (Fig. 3). In diese Ausnehmungen 14 ist ein Werkzeug einführbar, das an die einander gegenüberliegenden Bereiche 2A, 2B benachbarter Seitenteile angreifbar ist, so daß die Demontage der Seitenteile erleichtert ist. So können die Seitenteile beispielsweise unter Aufhebelung mittels eines Schraubenziehers o. dgl. voneinander gelöst werden.

Fig. 3 zeigt eine Energieführungskette in der Draufsicht, die aus Bändern von baugleichen Seitenteilen besteht, wobei die Seitenteile gegenüberliegender Bänder jeweils spiegelbildlich zueinander ausgeführt sind. Gegenüberliegende Seitenteile sind mittels angeformter Raststege über die Querstege 15 miteinander verbunden. Es wird nochmals verdeutlicht, daß ein Verkippen oder ein Versatz benachbarter Seitenteile aus der verschwenkebene in einer Richtung senkrecht hierzu (Pfeil), durch die in die Führungsnuten 7 eingreifenden Vorsprünge 8 des jeweils benachbarten Seitenteils verhindert ist.

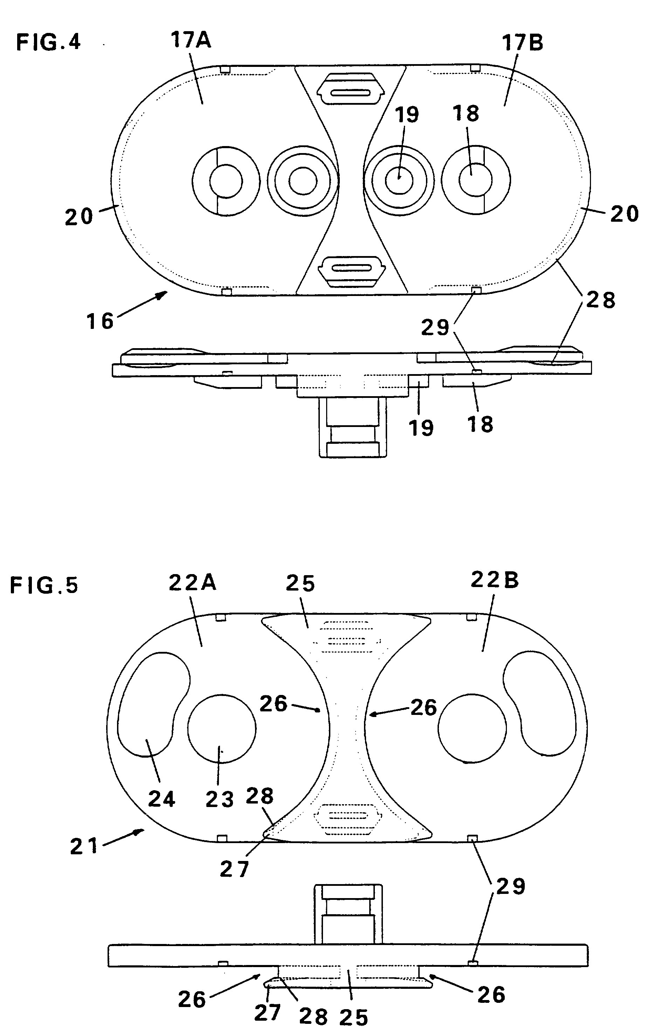

In Fig. 4 bis 6 ist eine weitere Ausführungsform dargestellt, wobei die aus Seitenteilen zusammengefügten seitlichen Bänder der Energieführungskette aus zwei unterschiedlichen Arten von Seitenteilen, Außen- und Innenlaschen besteht, die alternierend zueinander angeordnet sind. Die Außenlaschen 16 weisen zwei überlappende Bereiche 17A, 17B auf, die nach außen vorspringend angeordnet sind und die jeweils mit einem einteilig angeformten Gelenkbolzen 18 und Anschlag 19 versehen sind. Des weiteren sind stirnseitig an den überlappenden Bereichen 17A, 17B in die Verschwenkebene vorstehende Vorsprünge 20 angeordnet, die sich über die gesamte Höhe der Außenlaschen 16 erstrecken.

Die zu den Außenlaschen 16 benachbarten Innenlaschen 21 weisen überlappende Bereiche 22A, 22B auf, die dem Inneren der Energieführungskette zugewandt und mit Ausnehmungen 23, 24 versehen sind, die mit den Gelenkbolzen 18 und den Anschlägen 19 der benachbarten Außenlaschen korrespondieren. Die Innenlaschen 21 weisen an ihren Mittelbereichen 25, den freien Enden der überlappenden Bereiche 22A, 22B zugewandt, Führungsnuten 26 auf, in die die Vorsprünge 20 der Außenlaschen 16, entsprechend der Montage der Seitenteile 1 nach Fig. 1-3 aneinander, einführbar sind. Die äußere Flanke 27 der Führungsnut 26 sowie die Vorsprünge 20 sind wie diejenigen der Seitenteile 1 ausgeführt und insbesondere mit montageerleichternden Einbuchtungen 28 versehen.

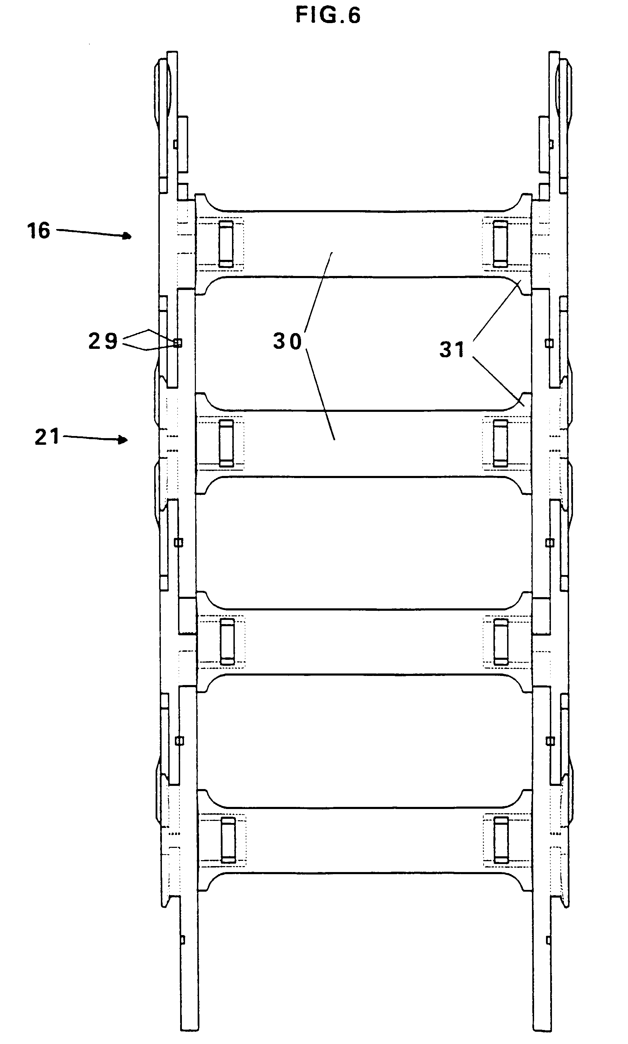

Wie aus Fig. 6 hervorgeht, weisen die Seitenteile wiederum Ausnehmungen 29 auf, die an die überlappenden Bereiche des jeweils benachbarten Seitenteils angrenzen und die Demontage benachbarter Seitenteile erleichtern.

Die Außen- und Innenlaschen werden über Querstege 30 miteinander verbunden, die an zum Inneren der Energieführungskette weisenden Raststegen befestigbar sind. Dabei weisen die Querstege 30 an ihren Enden Aufweitungen 31 auf, so daß die an den Außenlaschen 16 befestigten Querstege 30 mit den benachbarten Innenlaschen 21 überlappen. Durch Zusammenwirken der Querstege 30 mit den überlappenden Bereichen der Außenlaschen 16 werden somit Führungsnuten gebildet, wodurch die Seitenstabilität der Energieführungskette zusätzlich erhöht wird.

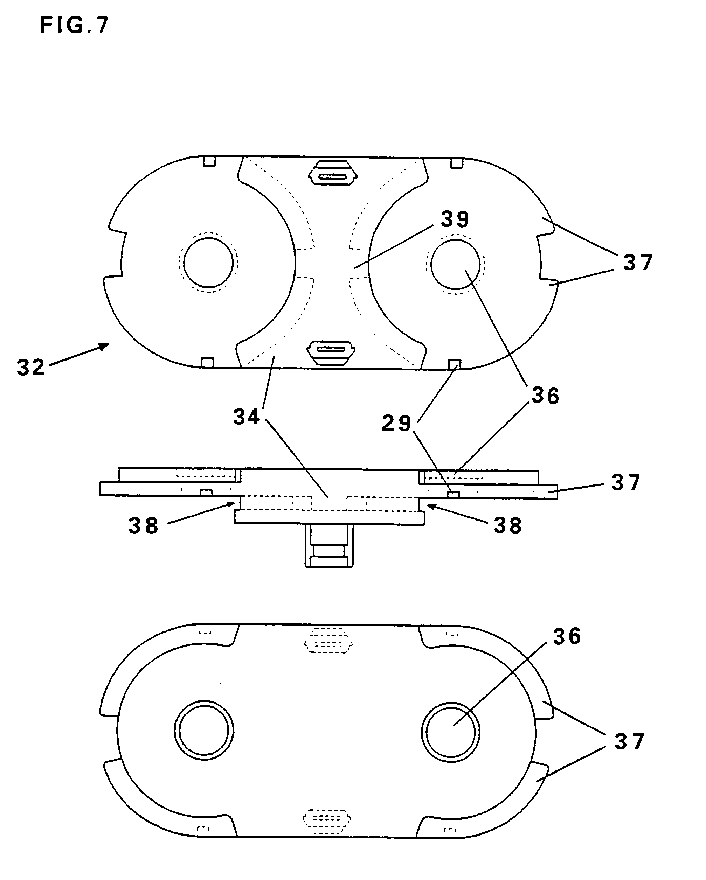

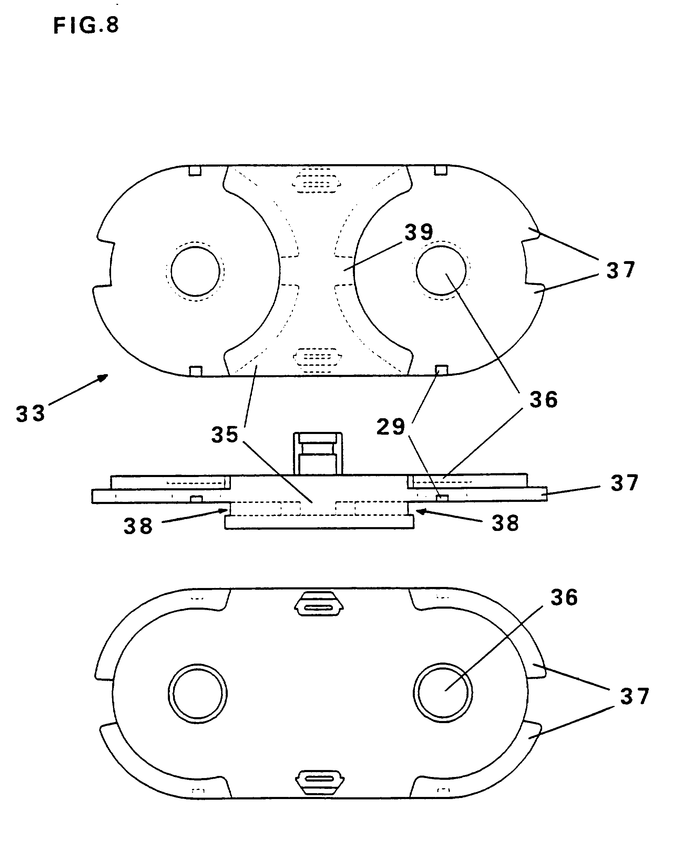

In den Fig. 7 bis 9 ist eine weitere Ausführungsform gezeigt, bei der die Energieführungskette alternierend angeordnete Außenlaschen 32 und Innenlaschen 33 aufweist. Die Außenlaschen 32 sind mit zum Inneren des Kettengliedes hin und die Innenlaschen 33 mit nach außen hin vorstehenden Mittelbereichen 34, 35 versehen, die jeweils zwischen den mit benachbarten Seitenteilen überlappenden Bereichen angeordnet sind. Die überlappenden Bereiche benachbarter Seitenteile weisen in der Verschwenkachse zueinander fluchtende Durchgangsbohrungen 36 auf, in die nicht dargestellte Gelenkbolzen einführbar und lösbar befestigbar sind. Bei dieser Ausführungsform ist jeder der gelenkig mit den benachbarten Seitenteilen befestigte überlappende Bereich eines Seitenteils mit einem als Führungsteil wirkendem Vorsprung 37 und jede Längsseite der Mittelbereiche 34, 35 mit einer mit dem Vorsprung des benachbarten Seitenteils korrespondierenden Führungsnut 38 versehen. Hierdurch ist jedes Seitenteil außen- und innenseitig von einem benachbarten Seitenteil geführt, wodurch eine Energieführungskette mit besonders hoher Seitenstabilität resultiert.

In dem gezeigten Ausführungsbeispiel sind dabei die Führungsnut 38 und der Vorsprung 37 jeweils angrenzend zu der in der Verschwenkebene angeordneten Mittelebene des Seitenteils angeordnet, wobei die seitliche Ausdehnung der Führungsnut 38 und des Vorsprungs 37 der halben Stärke des Mittelbereichs 34, 35 entsprechen. Hierdurch sind sowohl der Vorsprung 37 als auch die äußere Flanke der Führungsnut 38 in gleicher Stärke ausgebildet.

Bei dieser Ausführungsform werden die Seitenteile unter paralleler Verschiebung in der Verschwenkebene aneinander befestigt, so daß die jeweils miteinander korrespondierenden Vorsprünge und Führungsnuten benachbarter Seitenteile ineinander eingreifen. Befinden sich die Seitenteile in ihrer Sollposition, so werden diese durch Einführung von Gelenkbolzen in die Durchgangsbohrungen 36 aneinander befestigt.

Die Seitenteile 32, 33 sind des weiteren mit Anschlägen 39 versehen, die in den Führungsnuten 38 angeordnet sind und seitliche Anschlagflächen aufweisen. Hierdurch wird die Führungsnut 38 in zwei Teilbereiche zergliedert, in die jeweils ein Vorsprung 37 des benachbarten Seitenteils eingreift. Die Vorsprünge 37 des Seitenteils werden dabei durch einen Einschnitt voneinander separiert. Dabei erstreckt sich der Einschnitt über einen größeren Umfangsbereich als der Anschlag 39, wodurch der Verschwenkbereich der Seitenteile definiert wird. Alternativ kann auch die Führungsnut mit einer Einbuchtung versehen sein, in die ein Vorsprung des benachbarten Seitenteils mit Untermaß eingreift.

Es ist selbstverständlich, daß auch bei den beiden erstgenannten Ausführungsformen eine entsprechende, den Verschwenkbereich eingrenzende Anordnung von Anschlägen und Einschnitten an den überlappenden Bereichen vorgenommen werden kann. Dabei ist es nicht notwendig, daß die Anschläge 39 vollständig in der Führungsnut angeordnet sind.

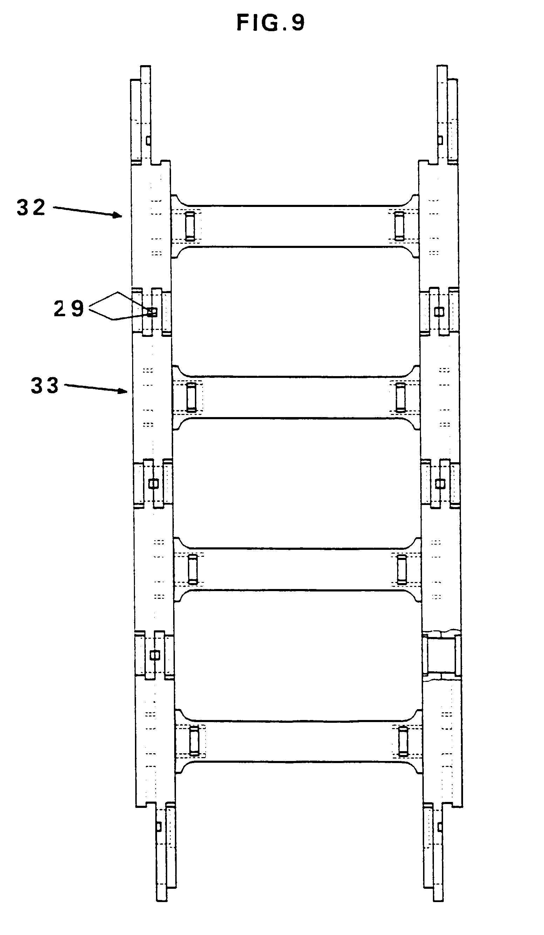

In Fig. 9 ist eine Draufsicht der Energieführungskette dargestellt, in der das kammartige Eingreifen benachbarter Seitenteile verdeutlicht wird. Auch in dieser Ausführungsform sind Ausnehmungen 29 vorgesehen, die die Demontage der Energieführungskette erleichtern.

### Energieführungskette

### Bezugszeichenliste

- 1: Seitenteil
- 2A: überlappender Bereich
- 2B: überlappender Bereich
- 3: Gelenkbolzen
- 4: Anschlag
- 5: Ausnehmung
- 6: Ausnehmung
- 7: Führungsnut
- 8: Vorsprung
- 9: äußere Flanke
- 10: Schräge
- 11: Schräge
- 12: Einbuchtung
- 13: Einbuchtung
- 14: Ausnehmung
- 15: Quersteg
- 16: Außenlasche
- 17A: überlappender Bereich
- 17B: überlappender Bereich
- 18: Gelenkbolzen
- 19: Anschlag
- 20: Vorsprung
- 21: Innenlasche
- 22A: überlappender Bereich
- 22B: überlappender Bereich
- 23: Ausnehmung
- 24: Ausnehmung
- 25: Mittelbereich
- 26: Führungsnut
- 27: äußere Flanke
- 28: Einbuchtung
- 29: Ausnehmung
- 30: Quersteg
- 31: Aufweitung
- 32: Außenlasche
- 33: Innenlasche
- 34: Mittelbereich
- 35: Mittelbereich
- 36: Durchgangsbohrung
- 37: Vorsprung
- 38: Führungsnut
- 39: Anschlag

## Patentansprüche

1. Energieführungskette zur Führung von Schläuchen, Kabeln o. dgl. zwischen zwei Anschlußpunkten, wobei die Kettenglieder jeweils zwei Seitenteile aufweisen, die über mindestens einen Quersteg miteinander verbunden sind, wobei die aus Seitenteilen zusammengefügten Bänder der Energieführungskette aus alternierend zueinander angeordneten Innenlaschen (21; 33) und Außenlaschen (16; 32) bestehen, wobei die Innenlaschen (21; 32) dem Inneren der Energieführungskette zugewandte überlappende Bereiche (22A, 22B) und die Außenlaschen (16; 32) nach außen vorspringende überlappende Bereiche (17A, 17B) aufweisen und über diese gelenkig in einer Ebene verschwenkbar miteinander verbunden sind, **dadurch gekennzeichnet,** daß zumindest eines der in einem Band der Energieführungskette jeweils benachbarten Seitenteile (21; 33) mindestens eine sich parallel zur Verschwenkebene erstreckende Führungsnut (26; 38) aufweist und das zu diesem benachbarte Seitenteil über den gesamten Verschwenkwinkel mit mindestens einem sich parallel zur Verschwenkebene erstreckenden Führungsteil in eine der Führungsnuten eingreift.

2. Energieführungskette nach Anspruch 1, **dadurch gekennzeichnet**, daß das Führungsteil als sich parallel zur Verschwenkebene erstreckender Vorsprung (20; 37) ausgebildet ist, der stirnseitig in Richtung zum benachbarten Kettenglied am Seitenteil angeordnet ist.

3. Energieführungskette zur Führung von Schläuchen, Kabeln o. dgl. zwischen zwei Anschlußpunkten, wobei die Kettenglieder jeweils zwei gekröpfte Seitenteile (1) mit einem nach außen gekröpften Bereich und einem nach innen gekröpften Bereich (15) aufweisen, über mindestens einen Quersteg miteinander verbunden sind und die Seitenteile benachbarter Kettenglieder miteinander überlappende Bereiche (2A, 2B) aufweisen und über diese gelenkig in einer Ebenee verschwenkbar miteinander verbunden sind, **dadurch gekennzeichnet,** daß das freie Ende eines überlappenden Bereichs (2A) des Seitenteils stirnseitig mindestens einen sich parallel zur Verschwenkebene erstreckenden Vorsprung (8) und, diesem gegenüberliegend, eine sich parallel zur Verschwenkebene erstrekkende Führungsnut (7) aufweist, wobei das Seitenteil (1) mit mindestens einem Vorsprung (8) in mindestens eine Führungsnut (7) im benachbarten Seitenteil (1) eingreift.

4. Energieführungskette nach Anspruch 2 oder 3, **dadurch gekennzeichnet,** daß der Vorsprung (8; 20; 37) eine geringere Dicke als das Seitenteil in dessen an den Vorsprung (8; 20; 37) angrenzenden Bereich aufweist und von der Außenfläche des Seitenteils beabstandet ist.

5. Energieführungskette nach einem der Ansprüche 2 bis 4, **dadurch gekennzeichnet,** daß die Führungsnut (7; 26; 38) und der Vorsprung (8; 20; 37) als Kreisbogensegmente ausgebildet sind, die sich im wesentlichen über die gesamte Höhe der überlappenden Bereiche (2A, 2B; 17A, 17B, 22A, 22B) der Seitenteile erstrecken.

6. Energieführungskette nach einem der Ansprüche 2 bis 5, **dadurch gekennzeichnet,** daß zumindest an einem der überlappenden Bereiche (2A, 2B; 17A, 17B, 22A, 22B) anschließender Seitenteile eine Ausnehmung (14; 29) angeordnet ist, in die ein Werkzeug einführbar ist, das an beiden überlappenden Bereichen (2A, 2B; 17A, 17B, 22A, 22B) angreift, so daß die Seitenteile voneinander lösbar sind.

7. Energieführungskette nach einem der Ansprüche 2 bis 6, **dadurch gekennzeichnet,** daß die Führungsnut (38) und der in diese eingreifende Vorsprung (37) Anschlagflächen zur Begrenzung des Verschwenkwinkels der beiden Seitenteile aufweisen.

8. Energieführungskette nach einem der Ansprüche 2 bis 7, wobei anschließende Seitenteile durch einstückig angeformte Gelenkbolzen und korrespondierende Ausnehmungen miteinander verbunden sind, **dadurch gekennzeichnet,** daß die Höhe der Gelenkbolzen (3, 18) und die Tiefe, mit der sich der Vorsprung (8; 20) in die zugehörige Führungsnut (7; 26) erstreckt, so bemessen sind, daß die Gelenkbolzen (3; 18) im Zusammenwirken mit der Führungsnut (7; 26) und dem Vorsprung (8; 20) eine Schnappverbindung bilden.

9. Energieführungskette nach Anspruch 8, **dadurch gekennzeichnet,** daß der Gelenkbolzen und/oder der Vorsprung und/oder die korrespondierende Führungsnut (7; 26) abgeschrägte Kanten aufweisen, die dem benachbarten Seitenteil gegenüberliegend angeordnet sind, um ein Aufeinandergleiten der Seitenteile zum Einschnappen zu ermöglichen.

10. Energieführungskette nach Anspruch 9, **dadurch gekennzeichnet,** daß die abgeschrägten Kanten des Vorsprungs und/oder der korrespondierenden Führungsnut (7; 26) als Einbuchtungen (12, 13; 28) an ihren zum anschließenden Seitenteil weisenden Seiten ausgebildet sind.

11. Energieführungskette nach Anspruch 1, wobei an den überlappenden Bereichen (17A, 17B) der Außenlaschen (16) einstückig angeformte Gelenkbolzen (18) und an den überlappenden Bereichen (22A, 22B) der Innenlaschen (21) mit den Gelenkbolzen (18) korrespondierende Gelenkausnehmungen (23) vorgesehen sind und die Innenlaschen (21) zum Kettenäußeren vorstehende Mittelbereiche (25) aufweisen, **dadurch gekennzeichnet,** daß das Führungsteil jeweils an den freien Enden der überlappenden Bereiche (17A, 17B) der Außenlasche (16) und die Führungsnut (26) an den den Außenlaschen (16) zugewandten Seiten des Mittelbereichs (25) der Innenlasche (21) angeordnet sind.

12. Energieführungskette nach Anspruch 1, wobei die überlappenden Bereiche der Außenlaschen (32) und Innenlaschen (33) miteinander durch lösbare Gelenkbolzen verbindbar sind und die Innenlaschen (33) zum Kettenäußeren und die Außenlaschen (32) zum Ketteninneren vorstehende Mittelbereiche (34, 35) aufweisen, **dadurch gekennzeichnet,** daß das Führungsteil jeweils an den freien Enden der überlappenden Bereiche der Außenlasche (32) und der Innenlasche (33) und die Führungsnut (38) jeweils an den den benachbarten Seitenteilen zugewandten Seiten der Mittelbereiche (34, 35) der Außenlasche (32) und der Innenlasche (33) angeordnet sind.

## Claims

1. Energy transmission chain for guiding hoses, cables and the like between two connection points, where the chain links each have two side elements which are connected by at least one cross-member, where the strips of the energy transmission chain are built by side elements of inner straps (21; 33) and outer straps (16; 32) arranged alternating with each other, the inner straps (21; 32) are provided with overlapping sections (22A, 22B) facing the interior of the energy guiding chain and the outer straps (16; 32) are provided with outwardly protruding overlapping sections (17A, 17B), the inner and outer straps are connected by the overlapping sections in pivoting and swivelling fashion in one plane, **characterised in that** at least one of the respective side elements (21; 33) arranged in a strip of the energy transmission chain adjacent to another one is provided with at least one guide groove (26; 38) extending parallel to the swivelling plane and the side element adjacent to this engages over the entire swivelling ancle with at least one guide element extending parallel to the swivelling plane one of the guide grooves.

2. Energy transmission chain as per Claim 1, **characterised in that** the guide element is designed as a projection (8, 20, 37) extending parallel to the swivelling plane and arranged on the face end of the side element (1, 16, 32) in the direction of the adjacent chain link.

3. Energy transmission chain for guiding hoses, cables and the like between two connection points, where the chain links each have two off-set side elements (1) having an outwardly off-set section and an inwardly off-set section (15), which are connected by at least one cross-member with each other, the side elements of adjacent chain links display overlapping sections (2A, 2B) and are joined via these in pivoting and swivelling fashion in one plane, **characterised in that** the free end of an overlapping section (2A) of the side element is provided at its face end with at least one protrusion (8) extending parallel to the swivelling plane and, opposite to this, is provided a guide groove (7) extending parallel in the swivelling plane, where the side element (1) engages with at least one projection (8) at least one guide groove (7) arranged in the adjacent side element (1).

4. Energy transmission chain as per Claim 2 or 3, **characterised in that** the projection (8, 20, 37) is thinner than the side element (1, 16, 32) in the section adjacent to the projection (8, 20, 37) and is arranged at a distance from the outer surface of the side element.

5. Energy transmission chain as per one of the Claims 2 to 4, **characterised n that** the guide groove (7, 26, 38) and the projection (8, 20, 37) are designed as circular arcs which essentially extend over the entire height of the overlapping sections (2A, 2B; 17A, 17B, 22A, 22B) of the side elements.

6. Energy transmission chain as per one of the Claims 2 to 5, **characterised in that** a recess (14; 29) is provided on at least one of the overlapping sections (2A, 2B; 17A, 17B, 22A, 22B) of adjacent side elements, in which a tool which engages both overlapping sections (2A, 2B; 17A, 17B, 22A, 22B) can be inserted, so that the side elements can be separated from each other.

7. Energy transmission chain as per one of the Claims 2 to 6, **characterised in that** the guide groove (38) and the projection (37) enganging the guide groove display stop faces to limit the swivelling angle of both side elements.

8. Energy transmission chain as per one of the Claims 2 to 7, where adjacent side elements are connected by means of one-piece, integrally moulded hinge pins and corresponding recesses, **characterised in that** the height of the hinge pins (3, 18) and the depth to which the projection (8; 20) extends into the corresponding guide groove (7; 26) are of such proportions that the hinge pins (3; 18) form a snap-in connection together with the guide groove (7; 26) and the projection (8; 20).

9. Energy transmission chain as per Claim 8, **characterised in that** the hinge pin and/or the projection and/or the corresponding guide groove (7; 26) display bevelled edges arranged opposite the adjacent side element, permitting the side elements to slide on one another to enable a snap-in connection.

10. Energy transmission chain as per Claim 9, **characterised in that** the bevelled edges of the projections and/or the corresponding guide groove (7; 26) are designed as indentations (12, 13; 28) arranged at their sides projecting to the adjacent side element.

11. Energy transmission chain as per Claim 1, wherein at the overlapping sections (17A, 17B) of the outer straps one-piece, integrally moulded hinge pins (18) are provided and at the overlapping sections (22A, 22B) of the inner straps (21) recesses (23) corresponding to the hinge pins (18) are provided, the inner straps (21) also displaying middle sections (25) which project towards the outside of the chain, **characterised in that** the guide element is arranged at the free ends of the overlapping sections (17A, 17B) of the outer strap (16) and the guide groove (26) on the sides of the middle section (25) of the inner strap (21) facing the outer straps (16), respectively.

12. Energy transmission chain as per Claim 1, whereby the overlapping sections of the outer straps (32) and inner straps (33) can be connected by detachable hinge pins and the inner straps (33) display middle sections (35) which project towards the outside of the chain and the outer straps (32) display middle sections (34) which project towards the inside of the chain, **characterised in that** the guide element is located on the free ends of the overlapping sections of the outer strap (32) and the inner strap (33) and the guide groove (38) is arranged on the middle sections (34, 35) of the outer straps (32) and inner straps (33) facing the adjacent side elements, respectively.

## Revendications

1. Chaîne de transmission d'énergie pour le guidage de tuyaux, de câbles, ou similaires, entre deux points de raccordement, dans laquelle les maillons de la chaîne comportent chacun deux parties latérales, lesquelles sont reliées l'une à l'autre par au moins une barrette transversale, les bandes de la chaîne de transmission d'énergie qui se composent des parties latérales étant constituées par des pattes intérieures (21 ; 33) et par des pattes extérieures (16 ; 32) agencées en alternance les unes par rapport aux autres, lesdites pattes intérieures (21 ; 32) présentant des zones en chevauchement (22A, 22B) tournées vers l'intérieur de la chaîne, et lesdites pattes extérieures (16 ; 32) présentant des zones en chevauchement (17A, 17B) en saillie vers l'extérieur, et ces pattes étant reliées les unes aux autres en pivotement de façon articulée dans un plan au moyen desdites zones, caractérisée en ce que l'une au moins des parties latérales (21 ; 33) respectivement voisines dans une bande de la chaîne comporte au moins une rainure de guidage (26 ; 38) qui s'étend parallèlement au plan de pivotement, et la partie latérale qui lui est voisine s'engage, sur la totalité de l'angle de pivotement et au moyen d'au moins une partie de guidage qui s'étend parallèlement au plan de pivotement, dans l'une des rainures de guidage.

2. Chaîne de transmission d'énergie selon la revendication 1, caractérisée en ce que la partie de guidage est réalisée sous forme d'une saillie (20 ; 37) s'étendant parallèlement au plan de pivotement, laquelle est agencée sur la partie latérale du côté frontal en direction du maillon de chaîne voisin.

3. Chaîne de transmission d'énergie pour le guidage de tuyaux, de câbles, ou similaires, entre deux points de raccordement, dans laquelle les maillons de chaîne comportent chacun deux parties latérales coudées (1) avec une zone coudée vers l'extérieur et une zone (15) coudée vers l'intérieur, lesdites parties latérales étant reliées l'une à l'autre via au moins une barrette transversale, et les parties latérales de maillons de chaîne voisins comportent des zones en chevauchement mutuel (2A, 2B), et sont reliées mutuellement en pivotement dans un plan au moyen de ces zones, caractérisée en ce que l'extrémité libre d'une zone en chevauchement (2A) de la partie latérale comporte du côté frontal au moins une saillie (8) qui s'étend parallèlement au plan de pivotement et, à l'opposé de cette saillie, une rainure de guidage (7) qui s'étend parallèlement au plan de pivotement, ladite partie latérale (1) s'engageant par au moins une saillie (8) dans au moins une rainure de guidage (7) dans la partie latérale voisine (1).

4. Chaîne de transmission d'énergie selon l'une ou l'autre des revendications 2 et 3, caractérisée en ce que la saillie (8 ; 20 ; 37) a une épaisseur plus faible que la partie latérale dans la zone de celle-ci adjacente à la saillie (8 ; 20 ; 37), et est écartée de la surface extérieure de la partie latérale.

5. Chaîne de transmission d'énergie selon l'une des revendications 2 à 4, caractérisée en ce que la rainure de guidage (7 ; 26 ; 38) et la saillie (8 ; 20 ; 37) sont réalisées sous forme de segments d'arc de cercle, qui s'étendent essentiellement sur la totalité de la hauteur des zones en chevauchement (2A, 2B ; 17A, 17B, 22A, 22B) des parties latérales.

6. Chaîne de transmission d'énergie selon l'une des revendications 2 à 5, caractérisée en ce que dans l'une au moins des zones en chevauchement (2A, 2B ; 17A, B, 22A, 22B) de parties latérales adjacentes est ménagé un évidement (14 ; 29), dans lequel on peut introduire un outil qui attaque les deux zones en chevauchement (2A, 2B ; 17A, 17B, 22A, 22B), de sorte que les parties latérales sont détachables l'une par rapport à l'autre.

7. Chaîne de transmission d'énergie selon l'une des revendications 2 à 6, caractérisée en ce que la rainure de guidage (38) et la saillie (37) qui s'engage dans celle-ci présentent des surfaces de butée pour limiter l'angle de pivotement des deux parties latérales.

8. Chaîne de transmission d'énergie selon l'une des revendications 2 à 7, dans laquelle des parties latérales adjacentes sont reliées mutuellement par des goujons d'articulation formés d'une seule pièce et par des évidements correspondants, caractérisée en ce que la hauteur des goujons d'articulation (3, 18), et la profondeur sur laquelle la saillie (8 ; 20) s'étend dans la rainure de guidage associée (7 ; 26) sont ainsi choisies que les goujons d'articulation (3 ; 18) forment une liaison à encliquetage en coopération avec la rainure de guidage (7 ; 26) et la saillie (8 ; 20).

9. Chaîne de transmission d'énergie selon la revendication 8, caractérisée en ce que le goujon d'articulation et/ou la saillie et/ou la rainure de guidage correspondante (7 ; 26) présentent des arêtes biseautées, agencées à l'opposé de la partie latérale voisine, afin de permettre aux parties latérales de coulisser l'une sur l'autre pour l'encliquetage.

10. Chaîne de transmission d'énergie selon la revendication 9, caractérisée en ce que les arêtes biseautées de la saillie et/ou de la rainure de guidage correspondante (7 ; 26) sont réalisées sous forme de creux (12, 13 ; 28) sur leur côté tourné vers la partie latérale adjacente.

11. Chaîne de transmission d'énergie selon la revendication 1, dans laquelle sont prévus des goujons d'articulation (18) conformés d'une seule pièce sur les zones en chevauchement (17A, 17B) des pattes extérieures (16), et des évidements d'articulation (23) correspondant aux goujons d'articulation (18) sur les zones en chevauchement (22A, 22B) des pattes intérieures (21), et les pattes intérieures (21) présentent des zones médianes (25) qui dépassent vers l'extérieur de la chaîne, caractérisée en ce que la partie de guidage est agencée respectivement aux extrémités libres des zones en chevauchement (17A, 17B) des pattes extérieures (16), et la rainure de guidage (26) est agencée sur les côtés, tournés vers les pattes extérieures (16), de la zone médiane (25) des pattes intérieures (21).

12. Chaîne de transmission d'énergie selon la revendication 1, dans laquelle les zones en chevauchement des pattes extérieures (32) et des pattes intérieures (33) sont susceptibles d'être reliées les unes aux autres par des goujons d'articulation détachables, les pattes intérieures présentent des zones médianes dépassant vers l'extérieur de la chaîne, et les pattes extérieures (32) présentent des zones médianes dépassant vers l'intérieur de la chaîne, caractérisée en ce que la partie de guidage est agencée respectivement aux extrémités libres des zones en chevauchement des pattes extérieures (32) et des pattes intérieures (33), et la rainure de guidage (38) est agencée et respectivement sur les côtés, tournés vers les parties latérales voisines, des zones médianes (34, 35) de la patte extérieure (32) et de la patte intérieure (33).
